# EUROPÄISCHE PATENTSCHRIFT

(11) **EP 1 946 191 B1**
(45) Veröffentlichungstag und Bekanntmachung des Hinweises auf die Patenterteilung: **27.05.2009**
(21) Anmeldenummer: 06807734.6
(22) Anmeldetag: 03.11.2006
(51) Int. Cl.: G05B 19/042

(54) **VERFAHREN ZUM BETREIBEN EINES FELDGERÄTES DER AUTOMATISIERUNGSTECHNIK MIT SONDERFUNKTIONALITÄTEN**
METHOD FOR OPERATING A FIELD DEVICE IN AUTOMATION ENGINEERING WITH SPECIAL FUNCTIONALITIES
PROCÉDÉ D'UTILISATION D'UN APPAREIL DE TERRAIN DE LA TECHNIQUE D'AUTOMATISATION AUX FONCTIONNALITÉS SPÉCIALES

(30) Priorität: 07.11.2005 DE 102005053332
(43) Veröffentlichungstag der Anmeldung: 23.07.2008
(73) Patentinhaber: Endress+Hauser Flowtec AG, 4153 Reinach (CH)
(72) Erfinder: LEFEBVRE, Martine, 68730 Blotzheim (FR)
(74) Vertreter: Andres, Angelika Maria
(86) Internationale Anmeldenummer: PCT/EP2006/068072
(87) Internationale Veröffentlichungsnummer: WO 2007/051837

(56) Entgegenhaltungen:
- EP-A- 1 093 039
- DE-A1- 10 330 191

## Beschreibung

Die Erfindung betrifft ein Verfahren zum Betreiben eines Feldgerätes der Automatisierungstechnik mit Sonderfunktionalitäten gemäß dem Oberbegriff des Anspruchs 1.

In der Automatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Massedurchflussmessgeräte, Druck- und Temperaturmessgeräte etc., die als Sensoren die entsprechenden Prozessvariablen Füllstand, Durchfluss, Druck bzw. Temperatur erfassen.

Zur Beeinflussung von Prozessvariablen dienen Aktoren, die z. B. als Ventile den Durchfluss einer Flüssigkeit in einem Rohrleitungsabschnitt oder als Pumpen den Füllstand in einem Behälter steuern.

Eine Vielzahl solcher Feldgeräte wird von der Fa. Endress + Hauser hergestellt und vertrieben.

In der Regel sind Feldgeräte in modernen Fabrikationsanlagen über Feldbussysteme (HART, Profibus, Foundation Fieldbus, etc.), mit übergeordneten Einheiten (z. B. Leitsysteme oder Steuereinheiten) verbunden. Diese übergeordneten Einheiten dienen unter anderem zur Prozesssteuerung, Prozessvisualisierung, Prozessüberwachung sowie zur Inbetriebnahme der Feldgeräte. Als Feldgeräte werden allgemein solche Einheiten bezeichnet, die direkt an einen Feldbus angeschlossen sind und zur Kommunikation mit den übergeordneten Einheiten dienen (z. B. Remote I/O, Gateways, Linking Devices).

Meist sind Feldbussysteme in Untemehmensnetzwerke integriert. Damit kann aus unterschiedlichen Bereichen eines Unternehmens auf Prozess- bzw. Feldgerätedaten zugegriffen werden.

Zur weltweiten Kommunikation können die Firmennetzwerke auch mit öffentlichen Netzwerken, z. B. dem Internet verbunden sein.

Moderne Feldgeräte weisen vielfach eine standardisierte Feldbusschnittstelle zur Kommunikation mit einem offenen Feldbussystem und/oder eine proprietäre Schnittstelle zur herstellerspezifischen Kommunikation mit einer Service/Bedieneinheit auf. Häufig handelt es sich bei den Service/Bedieneinheiten um tragbare Kleinrechner (Laptops, Palms etc.), wie sie aus dem Consumer-Electronic-Bereich (Büro- und Heim-Computer) allgemein bekannt sind:

Einige Feldgeräte weisen Sondenunktionalitäten auf, die mit einem entsprechenden Hardwareschlüssel freischaltbar sind. Derartige Hardwareschlüssel sind auch unter dem Begriff "Dongle" oder F-Chip bei der Fa. Endress + Hauser Flowtec bekannt. Die Sonderfunktionalitäten betreffen häufig Durchflussmessgeräte mit speziellen Funktionen, wie Dosierfunktionen für den Batch-Betrieb, Diagnosefunktionen (vorausschauende Wartung), Viskosität-Messfunktionen, Dichte-Messfunktionen etc. aufweisen; z. B. Beispiel Endress + Hauser Produkt Promass 83 (Viskosität, Sonderdichte, Batching, Predictive Maintenance Optionen) bzw. Promag 53 (Batching oder ECC Optionen).

Um diese Funktionen nutzen zu können, muss der Anwender den entsprechenden Dongle beim Geräteherstellerer erwerben. Eine solche Vorgehensweise ist beispielsweise bekannt aus der EP-A-1 093 039. Beim erstmaligen Verwenden eines Dongles in einem Feldgerät wird die Seriennummer des Feldgerätes in den Dongle übertragen und in diesem gespeichert. Damit ist der Dongle dem betreffenden Feldgerät zukünftig zugeordnet und kann in keinem anderen Feldgerät mehr verwendet werden, da beim Einschalten des Geräts immer eine Überprüfung der im Dongle gespeicherten Seriennummer stattfindet. Beim Auswechseln von Platinen im Feldgerät muss auf diese Überprüfung geachtet werden.

Zum Freischalten der speziellen Softwarefunktionalitäten wird der im Dongle gespeicherte Freischaltcode ins Feldgerät übertragen. Das im Feldgerät ablaufende Steuerungsprogramm ermittelt aus dem Freischaltcode die entsprechende freizuschaltende Softwarefunktionalität. Der F-Chip beinhaltet einen PIC Prozessor der u. a. auch für die verschlüsselte Übertragung der Informationen zuständig ist. Die verschiedenen Sonderfunktionen sind in einem Bit-Muster Bitweise kodiert (die Dosierfunktion eines Promass-Gerätes erhält einen anderen Bit Wert als die Dosierfunktion eines Promag-Gerätes) Die bestellten Optionen werden bei der Produktion in einen F-Chip einprogrammiert. Beim Einschalten des Gerätes "fragt" der Messverstärker den F-Chip Prozessor nach den freigegebenen Optionen und schaltet die entsprechenden Parameter zum Konfigurieren der Optionen frei.

Die unveränderliche Zuordnung zwischen Dongle und Feldgerät ist für den Anlagenbetreiber häufig unbefriedigend. Benötigt der Anwender an mehreren Messstellen z. B. bei der Inbetriebnahme einer Anlage eine spezielle Dichtefunktionalität, so ist er gezwungen, um diese Funktionalität nutzen zu können, für jedes Durchflussmessgerät einen entsprechenden Dongle zu erwerben. Vielen Anwendern ist der Aufwand zu teuer, für eine quasi einmalige Nutzung einer Sonderfunktionalität mehrere Dongle zu erwerben.

Außerdem ist es für den Gerätehersteller sehr aufwendig, wenn bei der Reparatur eines Feldgerätes die Hauptplatine ersetzt werden muss, sicherzustellen, dass der Anwender seinen bereits erworbenen Dongle weiterhin verwenden kann. Hierfür muss die Seriennummer des Altgerätes auf die neue Hauptplatine entsprechend übertragen werde.

Weiterhin ist es auch aufwendig für Kunden, die mehrere Geräte mit Dongle mit unterschiedlichen Konfigurationen haben, Ersatzgeräte auf Lager zu halten. Hier muss ein Gerät pro F-Chip Typ oder ein Gerät mit allen F-Chip Optionen gelagert werden.

Weiterhin ist es sehr aufwendig, wenn beim Kunden ein Dongle verloren geht, einen entsprechenden Ersatz-Dongle bereitzustellen.

Aufgabe der Erfindung ist es, ein einfaches Verfahren zum Betreiben eines Feldgerätes der Automatisierungstechnik mit Sonderfunktionalitäten anzugeben, dass die oben genannten Nachteile nicht aufweist, das insbesondere die Mehrfachnutzung eines Freischaltcodes ermöglicht.

Gelöst wird diese Aufgabe durch nachfolgende im Anspruch 1 angegebenen Veufahrensschritte.

Verfahren zum Betreiben eines Feldgerätes der Automatisiemngstechnik das Sondenfunktionalitäten aufweist, die mit Hilfe eines Freischaltcodes freischaltbar sind,

mit folgenden Verfahrensschritten:
1. Speicherung eines Freischaltcodesatzes mit mehreren Freischaltcodes in einer übergeordneten Schlüsselverwaltungseinheit, wobei einzelnen Freischaltcodes des Freischaltcodesatzes das Attribut "frei" oder "gesperrt" zugeordnet ist
2. Übertragung eines Datenpakets von einer Anfrageeinheit zur Schlüsselverwaltungseinheit mit einer Anfrage nach einem Freischaltcode, der das Attribut "frei" besitzt,
3. Prüfung ob im Freischaltcodesatz der Schlüsselverwaltungseinheit ein Freischaltcode mit dem Attribut "frei" vorhanden ist
4. Falls ein Freischaltcode mit dem Attribut "frei" vorhanden ist, Versenden eines Datenpakets mit diesem freien Freischaltcode, von der Schlüsselverwaltungseinheit an die Anfrageeinheit
5. Ändern des Attributs des gesendeten Freischaltcodes von "frei" in "gesperrt" in der Schlüsselverwaltungseinheit
6. Freischalten der dem betreffenden Freischaltcode zugeordneten Sonderfunktionalitäten im Feldgerät.

Die wesentliche Idee der Erfindung besteht darin, einzelne Freischaltcodes in einer übergeordneten Schlüsselverwaltungseinheit zu verwalten und mit entsprechenden Attributen frei oder gesperrt zu versehen. Wird in einem Feldgerät eine bestimmte Sonderfunktionalität benötigt, so folgt eine Anfrage an die Schlüsselverwaltungseinheit, ob ein Freischaltcode aus einem Freischaltcodesatz das Attribut "frei" besitzt. Ist ein freier Freischaltcode vorhanden, so wird dieser zum Freischalten der Softwarefunktionalität ins Feldgerät übertragen. Gleichzeitig wird das Attribut des entsprechenden Freischaltcodes von frei auf gesperrt gesetzt.

Vorteilhafte Weiterentwicklungen der Erfindung sind in den Unteransprüchen angegeben.

Die Anfrage nach einem Freischaltcode kann entweder vom betreffenden Feldgerät oder von einer Bedieneinheit erfolgen.

Entsprechend wird der freie Freischaltcode entweder an das Feldgerät oder an die Bedieneinheit übertragen.

Bei der Schlüsselverwaltungseinheit kann es sich entweder um ein Leitsystem oder aber auch um einen dem Gerätehersteller zugeordneten Server handeln.

Nachfolgend ist die Erfindung anhand eines in der Zeichnung dargestellten Ausführungsbeispiels näher erläutert.

Es zeigen:

Fig. 1 Netzwerk der Automatisierungstechnik mit mehreren

Feldgeräten in schematischer Darstellung;

Fig. 2 Blockschaltbild eines Feldgerätes mit einem

eingesetzten Dongle;

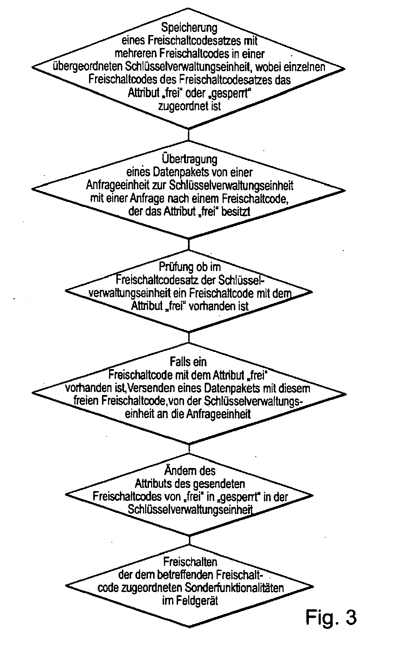

Fig. 3 Flussdiagramm des erfindungtemäßen Verfahrens

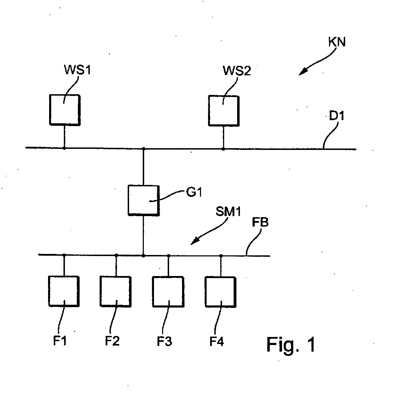

In Fig. 1 ist ein Netzwerk der Automatisierungstechnik näher dargestellt. An einem Datenbus D1 sind mehrere Rechnereinheiten (Arbeitsplatzrechner, Workstations) WS1, WS2, angeschlossen. Diese Rechnereinheiten dienen als übergeordnete Einheiten (Leitsystem bzw. Steuereinheit), unter anderem zur Prozessvisualisierung, Prozessüberwachung und zum Engineering wie zum Bedienen und Überwachen von Feldgeräten. Der Datenbus D1 arbeitet z. B. nach dem Profibus DP-Standard oder nach dem HSE (High Speed Ethernet)-Standaud der Foundation Fieldbus. Über ein Gateway G1, das auch als Linking Device, Field Controller oder auch als Segment-Koppler bezeichnet wird, ist der Datenbus D1 mit einem Feldbus-Segment SM1 verbunden. Das Feldbus-Segment SM1 besteht aus mehreren Feldgeräten F1, F2, F3, F4, die über einen Feldbus FB miteinander verbunden sind. Bei den Feldgeräten F1, F2, F3, F4 kann es sich sowohl um Sensoren oder um Aktoren handeln. Der Feldbus FB arbeitet entsprechend nach einem der bekannten z.B. Feldbusstandards Profibus. Foundation Fieldbus oder HART.

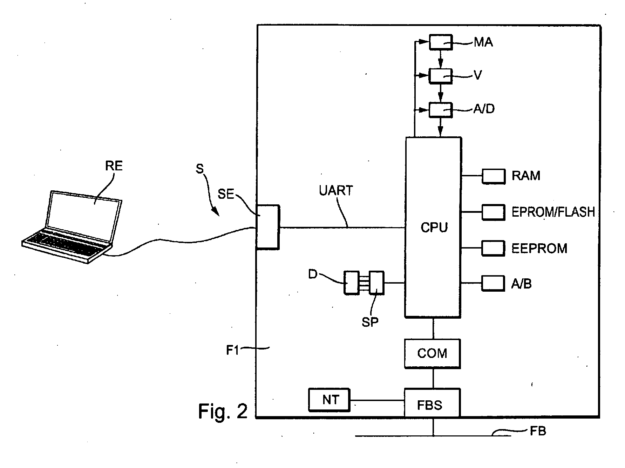

In Fig. 2 ist ein Blockschaltbild eines erfindungagemäßen Feldgerätes z. B. F1 näher dargestellt. Eine Prozessoreinheit CPU ist zur Messwertverarbeitung über einen Analog-Digital-Wandler A/D und einen Verstärkter V mit einem Messaufnehmer MA, der eine Prozessvariable (z. B. Druck, Durchfluss oder Füllstand) erfasst, verbunden. Die Prozessoreinheit CPU ist mit mehreren Speichereinheiten verbunden. Ein RAM-Speicher dient als temporärer Arbeitspeicher, ein nichtflüchtiger EPROM-Speicher oder FLASH-Speicher als Speicher für das in der Prozessoreinheit CPU auszuführende Steuerprogramm und ein EEPROM-Speicher als Speicher für Kalibrier- und Start-Parameterwerte insbesondere für das Setup Programm der Prozessoreinheit CPU.

Das Steuerprogramm definiert die anwendungsbezogene Funktionalität des Feldgerätes (Messwertberechnung, Hüllkurvenauswertung, Linearisierung der Messwerte, Diagnoseaufgaben).

Weiterhin ist die Prozessoreinheit CPU mit einer Anzeigebedieneinheit A/B (z.B. LCD-Display mit 3-5 Drucktasten) verbunden.

Zur Kommunikation mit dem Feldbus-Segment SM1 ist die Prozessoreinheit CPU über einen Kommunikationscontroller COM mit einer Feldbusschnittstelle FBS verbunden. Ein Netzteil NT liefert die notwendige Energie für die einzelnen Elektronik-Komponenten des Feldgerätes F1. Die Versorgungsleitungen zu den einzelnen Komponenten sind der Übersichtlichkeit halber nicht eingezeichnet.

In einer alternativen Ausgestaltung der Erfindung kann die Spannungsversorgung des Feldgerätes F1 nicht über die Feldbusschnittstelle FBS sondern über eine separate Spannungsversorgungseinheit erfolgen.

Eine UART Schnittstelle der Prozessoreinheit CPU ist mit einem Servicesteckeranschluss SE, der bei herkömmlichen Feldgeräten als Kabelanschluss für eine tragbare Rechnereinheit RE z.B. Laptop dient, verbunden. Diese Schnittstelle am Feldgerät wird oft auch als Service-Schnittstelle S bezeichnet.

Über eine Rechnereinheit RE kann das Feldgerät F1 in einfacher Weise über diese Service-Schnittstelle S bedient werden und konfiguriert werden.

Ein herkömmlicher Dongle D ist auf einem separaten Steckplatz SP lösbar eingesetzt.

Nachfolgend ist zunächst das herkömmliche Verfahren zum Freischalten von Sonderfunktionalitäten mit Hilfe eines bekannten Dongles erläutert.

Der Anwender erwirbt einen Dongle D für die gewünschte Sonderfunktionalität (z. B. Dichtemessung) beim Gerätehersteller. Dieser Dongle D wird auf den Steckplatz SP im Feldgerät F1 eingesetzt. Das Anwendungsprogramm, das in der Prozessoreinheit CPU ausgeführt wird, liest zuerst das Datenfeld für die Serien-Nummer des Einsatzgerätes aus dem Dongle D aus. Bei der erstmaligem Verwenden des Dongles ist werkseitig die Default-Serien-Nummer #define DEFAULTPRODNUM "???????????" gesetzt. Anschließend wird die Serien-Nummer z. B. 3A041191000 des betreffenden Feldgerätes in den Dongle D übertragen und gespeichert.

Diese Übertragung ist nur möglich, wenn beim Auslesen noch die Default-Serien-Nummer #define DEFAULTPRODNUM "???????????"

gesetzt war. Wird eine "echte" Serien-Nummer z. B. 3A041191000 ausgelesen, so kann keine Änderung der Serien-Nummer mehr vorgenommen werden. Damit ist der Dongle D eindeutig dem Feldgerät F1 zugeordnet.

Beim Einschalten des Feldgerätes (Power On oder in der Boot Phase) wird zuerst überprüft:

Ist ein Dongle hardwaremäßig vorhanden. Anschließend wird überprüft ob das Datenfeld mit der Serienummer noch leer ist oder nicht.

Soll eine bestimmte Sonderfunktionalität, z. B. eine Diagnosefunktion, freigeschaltet werden, so wird der im Dongle abgespeicherte Freischaltcode (Schlüsselcode) ausgelesen.

Über das Steuerprogramm wird geprüft, ob der Freischaltcode zum Freischalten der Diagnosefunktion berechtigt. Wenn die Berechtigung gegeben ist, wird die Diagnosefunktion gestartet und ausgeführt.

Wenn keine Berechtigung vorliegt, weil die im Dongle gespeicherte Serien-Nummer nicht mit der Serien-Nummern übereinstimmt oder weil kein gültiger Freischaltcode vorhanden ist, wird die entsprechende Diagnosefunktion nicht ausgeführt.

Die Kommunikation zwischen Dongle und Gerät kann verschlüsselt erfolgten.

Im Dongle können auch mehrere Freischaltcodes gespeichert sein. Theoretisch sind alle Freischaltcodes für ein Gerät untereinander kombinierbar.

Nachfolgend ist das erfindungsgemäße Verfahren näher erläutert, das keinen Hardwareschlüssel benötigt.

In einem ersten Verfahrensschritt A wird ein Freischaltcodesatz mit mehreren Freischaltcodes in einer übergeordneten Schlüsselverwaltungseinheit gespeichert. Diese Schlüsselverwaltungseinheit kann z. B. in der Rechnereinheit WS1 vorgesehen sein.

Jedem Freischaltcode des Freischaltcodesatzes ist ein Attribut frei bzw. gesperrt zugeordnet.

In einem Verfahrensschritt B wird eine Anfrage zur Schlüsselverwaltungseinheit übertragen, ob ein Freischaltcode mit dem Attribut frei vorhanden ist.

Anschließend wird diese Anfrage in einem Verfahrensschritt C in der Schlüsselverwaltungseinheit geprüft.

Falls ein freier Freischaltcode vorhanden ist, wird der freie Freischaltcode an das Feldgerät übertragen. Mit Hilfe des Freischaltcodes FS ist das Freischalten der gewünschten Sondeifunktionalität möglich.

Mit dem Versenden des freien Freischaltcodes FS wird in der Schlüsselverwaltungseinheit das Attribut dieses Freischaltcodes von frei in gesperrt geändert. Die Schlüsselverwaltungseinheit speichert die Serienummer oder einen Unique Identifier (Tagname z.B) der Geräte die einen Freischaltcode bekommen haben. Damit kann der Kunde leicht erkennen auf welche Geräte Schlüssel verteilt worden sind.

Mit Hilfe des Freischaltcodes FS wird die gewünschte Sonderfunktionalität im Feldgerät F1 freigeschaltet.

Falls alle Freischaltcodes in der Schlüsselverwaltungseinheit gesperrt sind, kann natürlich kein Freischaltcode mehr übertragen werden. Es erfolgt eine Meldung "kein freier Freischaltcode vorhanden". Über einen Web-Service kann der Anwender einen neuen zusätzlichen Freischaltcode erwerben.

Es ist auch möglich Freischaltcodes, die nicht mehr benötigt werden an die Schlüsselverwaltungseinheit zurückzugeben.

Das Gerät muss dabei mit der Schlüsselverwaltungseinheit verbunden sein. Über eine entsprechende Benutzeroberfläche (entsprechend bei der Freischaltung) wird gefragt, ob das Attribut von "gesperrt" auf "frei" zu setzen ist. Danach findet eine Kommunikation zwischen Gerät und Schlüsselverwaltungseinheit statt, um den betreffenden Freischaltcode im Gerät zurückzusetzen. Dabei wird im Gerät automatisch ein Reset durchgeführt, danach ist die Funktionalität im Feldgerät nicht mehr verfügbar

Die wesentlichen Vorteile, die das erfindungsgemäße Verfahren bietet, sind folgende. Es muss nicht für jedes Gerät ein Freischaltcode erworben werden. Es können Sonderfunktionalitäten unterschiedlicher Feldgeräte mit einem einzigen Freischaltcode jedoch zeitlich versetzt genutzt werden.

Es können alle möglichen Kombinationen (jedoch nur sinnvolle) von Funktionalitäten freigeschaltet werden ohne dass das Bestellsystem beim Gerätehersteller überlastet wird.

Mit einer Anzahl N unterschiedliche Freischaltcodes kann immer eine Gruppe von bis zu N Geräten die Sonderfunktionalität nutzen. Ein Hardware-Dongle ist nicht mehr notwendig.

Es ist auch denkbar dem Freischaltcode eine feste Zeitdauer zuzuordnen. Falls dieses Attribut "Zeitdauer" gesetzt ist muss im Gerät ein Countdown -Zähler gestartet werden, der die verbleibende Zeit bestimmt.

Die Anfrage an die Schlüsselverwaltungseinheit kann vom Feldgerät direkt oder aber auch von der Bedieneinheit aus erfolgen. Über die Bedieneinheit kann eine bestimmte Sonderfunktionalität an einem Feldgerät aufgerufen werden. Verfügt das Gerät über eine Ethernet Schnittstelle, so ist eine direkte Verbindung zur Schlüsselverwaltungseinheit über die üblichen Protokolle denkbar.

Ist das Gerät über einen Feldbus an ein Leitsystem angeschlossen oder ein Bedientool wie z. B. Fieldcare Fa. Endress+Hauser, so kann die Schlüsselverwaltungseinheit Bestandteil von Fieldcare oder ein AddOn Module des Leitsystems sein.

Angenommen das Gerät hat kein Feldbusschnittstelle implementiert (Batchline Dosimag/ Dosimass Fa. Endress+Hauser) und verfügt nur über eine Service-Schnittstelle, dann ist nur über die Bedieneinheit eine Verbindung zur Schlüsselverwaltungseinheit möglich.

Entsprechend kann der freie Freischaltcode direkt ans Feldgerät über den Feldbus FB oder an die Bedieneinheit RE gesendet werden.

Über die Bedieneinheit RE kann über eine entsprechende Internetverbindung auch ein Server z. B. ein Endress+Hauser Server angerufen werden, um einen freien Freischaltcode zu erhalten.

Die Freischaltung kann z. B. über einen Web-Service erfolgen..

Die Schlüsselverwaltungseinheit sammelt die nötige Informationen aus dem Gerät zusammen mit dem Kundenwunsch die Optionen XY freizuschalten und schickt diese Informationen zu einem Web-Service der den Freischaltcode erzeugt, eventuell verrechnet und über eine gesicherte Übertragung zurückt zu der Schlüsselverwaltungseinheit ermittelt.

Die Kommunikation zwischen der Bedieneinheit RE und dem Feldgerät F1 kann z. B. über die Service-Schnittstelle S oder aber auch über den Feldbus FB erfolgen.

Im Prinzip handelt es sich hier um eine "floating licence" für mehrere Feldgeräte.

In einem erweiterten Verfahrenschritt C' wird von der Schlüsselverwaltungseinheit auch überprüft, ob das Feldgerät die benötigen Ressourcen (Hardware bzw. Softwareversion) überhaupt besitzt, um die gewünschte Sonderfunktionalität zu unterstützten. So hat z. B. die ECC-Option für einen Promag-Gerät keinen Sinn, wenn die benötigte Elektrode nicht montiert ist oder die Option Viskositätsmessung nicht möglich ist, weil diese erst für Promass-Geräte ab Version 2.00.00 vorgesehen ist.

Denkbar ist auch, dass von einem Leitsystem, das mit der Schlüsselverwaltungseinheit kommuniziert, Maßnahmen angeboten werden, wenn die Ressourcen nicht ausreichend sind.

**Tabelle 1**

| | |
|---|---|
| Analog-Digital-Wandler | A/D |
| Anzeigebedieneinheit | A/B |
| Datenbus | D 1 |
| Dongle | D |
| EPROM-Speicher | EPROM |
| Feldbus | FB |
| Feldbus-Segment | SM 1 |
| Feldgerät | F1 |
| Feldgeräten | F1, F2, F3, F4 |
| Flash-Speicher | FLASH |
| Gateway | G1, |
| Kommunikationsschnittstelle | KS |
| Netzteil | NT |
| Prozessoreinheit | CPU |
| RAM-Speicher | RAM |
| Rechnereinheit | RE |
| Rechnereinheiten | WS1, WS2 |
| Freischaltcodes | FS |
| Steckplatz | SP |
| Verstärker | V |
| Feldbusschnittstelle | FBS |
| Servicesteckeranschluss | SE |
| Service-Schnittstelle | S |

## Patentansprüche

1. Verfahren zum Betreiben eines Feldgerätes der Automatisierungstechnik das Sonderfunktionalitäten aufweist, die mit Hilfe eines Freischaltcodes freischaltbar sind, mit folgenden Verfahrensschritten: Speicherung eines Freischaltcodesatzes mit mehreren Freisehaltcodes in einer übergeordneten Schlüsselverwaltungseinheit, wobei einzelnen Freischaltcodes des Freischaltcodesatzes das Attribut "frei" oder "gesperrt" zugeordnet ist ; Übertragung eines Datenpakets von einer Anfrageeinheit zur Schlüsselverwaltungseinheit mit einer Anfrage nach einem Freischaltcode, der das Attribut "frei" besitzt; Prüfung ob im Freischaltcodesatz der Schlüsselverwaltungseinheit ein Freischaltcode mit dem Attribut "frei" vorhanden ist; Falls ein Freischaltcode mit dem Attribut "frei" vorhanden ist, Versenden eines Datenpakets mit diesem freien Freischaltcode, von der Schlüsselverwaltungseinheit an die Anfrageeinheit; Ändern des Attributs des gesendeten Freischaltcodes von "frei" in "gesperrt" in der Schlüsselverwaltungseinheit; Freischalten der dem betreffenden Freischaltcode zugeordneten Sonderfunktionalitäten im Feldgerät.

2. Verfahren nach Anspruch 1, **dadurch gekennzeichnet, dass** falls ein Freischaltcode mit dem Attribut "frei" vorhanden ist, zusätzlich geprüft wird, ob die Anfrageeinheit die zur Freischaltung der Sonderfunktionalität benötige Ressourcen besitzt und ein Freischaltcode nur versendet wird, wenn die Ressourcen vorhanden sind.

3. Verfahren nach Anspruch 1 oder 2, **dadurch gekennzeichnet, dass** die Anfrageeinheit ein Feldgerät oder eine Bedieneinheit ist.

4. Verfahren nach Anspruch 2, **dadurch gekennzeichnet, dass** das Versenden eines freien Freischaltcodes an Feldgerät oder an die Bedieneinheit erfolgt.

5. Verfahren nach einem der vorhergehenden Ansprüche, **dadurch gekennzeichnet, dass** die Schlüsselverwaltungseinheit als Leitsystem dient.

6. Verfahren nach einem der vorhergehenden Ansprüche, **dadurch gekennzeichnet, dass** die Schlüsselverwaltungseinheit eine Rechnereinheit beim Gerätehersteller ist.

## Claims

1. Process for operating an automation engineering field device that exhibits special functions, which can be enabled with the aid of a release code, with the following process steps: saving a release code record with several release codes in a higher-order key manager, whereby the attribute "free" or "locked" is assigned to individual release codes of the release code record; transmission of a data packet from a requesting unit to the key manager, said packet requesting a release code that has the attribute "free"; checking whether a release code with the attribute "free" is available in the release code record of the key manager; if a release code with the attribute "free" is available, transmission of a data packet with this free release code from the key manager to the requesting unit; changing the attribute of the release code sent from "free" to "locked" in the key manager; in the device, enabling the special functionality that is assigned to the particular release code.

2. Process as per Claim 1, **characterized in that** in situations where a release code with the attribute "free" is available, the system checks whether the requesting unit has the necessary resources for enabling the special function and only sends a release code if the requisite resources are available.

3. Process as per Claim 1 or 2, **characterized in that** the requesting unit is a field device or an operating unit.

4. Process as per Claim 2, **characterized in that** a free release code is sent to the field device or the operating unit.

5. Process as per one of the previous claims, **characterized in that** the key manager acts as a control system.

6. Process as per one of the previous claims, **characterized in that** the key manager is a computer unit at the device manufacturer's site.

## Revendications

1. Procédé destiné à l'exploitation d'un appareil de terrain de la technique d'automatisation présentant des fonctionnalités spéciales, qui sont déverrouillables à l'aide d'un code de déverrouillage, avec les étapes de procédé suivantes : enregistrement d'un jeu de codes de déverrouillage constitué de plusieurs codes de déverrouillage dans une unité maître de gestion des clés, l'attribut "déverrouillé" ou "verrouillé" étant attribué aux différents codes de déverrouillage d'un jeu de codes de déverrouillage ; envoi d'un paquet de données depuis une unité d'interrogation vers une unité de gestion des clés avec une interrogation d'un code de déverrouillage, qui possède l'attribut "déverrouillé" ; contrôle si dans le jeu de codes de déverrouillage de l'unité de gestion des clés, il existe un code de déverrouillage avec l'attribut "déverrouillé" ; si un code de déverrouillage est présent avec l'attribut "déverrouillé", envoi d'un paquet de données avec ce code de déverrouillage déverrouillé depuis l'unité de gestion de clés vers l'unité d'interrogation ; changement de l'attribut du code de déverrouillage envoyé de l'état "déverrouillé" à l'état "verrouillé" dans l'unité de gestion des clés ; déverrouillage dans l'appareil de terrain des fonctionnalités spéciales attribuées au code de déverrouillage concerné.

2. Procédé selon la revendication 1, **caractérisé en ce qu'**en cas de présence d'un code de déverrouillage avec l'attribut "déverrouillé", il s'effectue un contrôle supplémentaire si l'unité d'interrogation possède les ressources nécessaires pour le déverrouillage de la fonctionnalité spéciale, l'envoi d'un code de déverrouillage intervenant uniquement si les ressources sont disponibles.

3. Procédé selon la revendication 1 ou 2, **caractérisé en ce que** l'unité d'interrogation est un appareil de terrain ou une unité de commande.

4. Procédé selon la revendication 2, **caractérisé en ce que** l'envoi d'un code de déverrouillage déverrouillé intervient sur l'appareil de terrain ou sur l'unité de commande.

5. Procédé selon l'une des revendications précédentes, **caractérisé en ce que** l'unité de gestion des clés sert de système de contrôle-commande.

6. Procédé selon l'une des revendications précédentes, **caractérisé en ce que** l'unité de gestion des clés est une unité informatique auprès du fabricant d'appareils.
